# EUROPEAN PATENT APPLICATION

(11) **EP 4 721 979 A2**
(43) Date of publication of application: **08.04.2026**
(21) Application number: 25199017.2
(22) Date of filing: 29.08.2025
(51) Int. Cl.: B32B 38/06, B29C 59/04, C14C 11/00, D06N 3/00

(54) **FIRST TREATMENT PLANT, SECOND TREATMENT PLANT AND SYSTEM COMPRISING THE AFORESAID TWO FIRST AND SECOND TREATMENT PLANTS FOR PRODUCING A MULTILAYER LAMINAR PRODUCT, IN PARTICULAR FOR THE ENNOBLING OF LEATHERS**

(30) Priority: 01.10.2024 IT 202400021702
(71) Applicant: GE.MA.TA. S.p.A., 36070 Trissino (VI) (IT)
(72) Inventor: MAITAN, Gianni, 36070 Trissino (VI) (IT)
(74) Representative: Marchioro, Paolo

(57) **Abstract**

A first treatment plant (100) and a second treatment plant (200) for respectively performing a first and a second surface treatment of a laminar support (1) for producing a multilayer laminar product (6).

The first treatment plant (100) provides an outlet winding assembly (114) for winding on a transfer reel (400) the strip of laminar element (4) coupled with the treated laminar support (1), while the second treatment plant (200) comprises at the inlet an unwinding assembly (201) configured to unwind the transfer reel (400) of the first treatment plant (100) so as to perform a second treatment on said laminar support (1).

## Description

The present invention concerns a first treatment plant, a second treatment plant and a system comprising the aforesaid two first and second treatment plants for producing a multilayer laminar product, in particular for the ennobling of leathers. The invention also concerns a method for producing a multilayer laminar product, in particular for the ennobling of leathers, implemented by means of the aforesaid system of the invention.

As is known, leathers of any quality are finished in the tannery in the last processing step, before being used in the various industrial sectors, in particular in the footwear, clothing, furniture and automotive sectors.

This finishing process gives the leather specific mechanical and chemical-physical characteristics. In general, this finish gives greater resistance to abrasion and rubbing, and greater protection against water and light. In addition, this finish allows to change the tactile sensation of the leather surface and allows to achieve the desired final colouring.

The finish is also carried out on the grain of the leathers, but it is especially necessary on second and third choice leathers, which have a deteriorated surface due to the presence of cuts, scratches, insect bites or other anomalies. In fact, these second or third choice leather surfaces must be ground to make them uniform, with the consequence that the natural grain of the leather, which gives it its particular appearance, is removed. In addition, this grinding operation disadvantageously modifies the physical characteristics of the leather itself, such as softness, elasticity and tensile strength.

A similar process can also be used to give a fabric, synthetic or otherwise, a leather-like appearance, in which case we speak of "imitation leather". Obviously, what will be described below is also fully applicable to the latter process.

Generally, during the ennobling process an embossing is also imprinted on the surface of the product, in order to reproduce a grain of the leather similar to the natural one or obtain particular aesthetic effects that contribute to increasing the value of the final product.

Usually this finishing may comprise several leather surface treatments performed in succession, such as for example a first surface finishing treatment involving the following operations: covering a laminar support, for example a leather to be ennobled, with a layer of water-based or solvent-based polyurethane or acrylic resin, at least partially consolidating said resin layer, imprinting an embossing on said layer and finally polymerizing the embossed resin layer, followed by a second surface finishing treatment involving the following operations: covering said already treated laminar support with a further protective and/or fixing layer of water-based or solvent-based polyurethane or acrylic resin, polymerizing said further layer so as to make it adhere stably to the laminar support, in particular to the leather, in order to give the latter the appropriate strength and the best final appearance.

In practice, these two treatments are carried out by means of two separate plants and usually located in different areas of a factory, or even located in different factories.

Therefore, according to the prior art, disadvantageously, it is provided that the laminar supports exiting from a first treatment plant must be taken one at a time by hand by a first operator and must be arranged in special stands, and then transported at the entry to a second treatment plant, where once again, disadvantageously, they are manually placed one at a time at the entry to said second treatment plant by a second operator.

Clearly, this circumstance, disadvantageously, entails a first important drawback that consists in the fact of having to require at least two operators at the exit of the first treatment plant and at the entry to the second treatment plant, thus increasing labour costs.

Moreover, still disadvantageously, these manual operations entail an increase in processing times due to the manual unloading and loading operation and the time required to transport the stand, always by hand, from one plant to another. In addition, this repetitive manual operation could cause damage or folds to the leather, reducing the quality of the final product.

Still disadvantageously, this procedure according to the known art has the drawback that the stand on which a plurality of laminar supports are stacked has a weight that is not insignificant. Therefore, this entails a non-negligible effort of the operator who must transfer the stand from the outlet of the first treatment plant at the inlet of the second treatment plant.

Moreover, this way of operating is not immune from possible, if not probable, injuries to the operator in charge of such transfer.

The present invention aims to overcome all the above-mentioned drawbacks inherent in the ennobling technique of known type described above and the related plants.

In particular, it is an object of the present invention to automate the operations of unloading, transferring and loading the laminar supports, in particular the leathers, from a first treatment plant to a second treatment plant.

Therefore, it is a further object to reduce the number of operators operating at these two plants, thus reducing personnel costs and processing times.

In addition, it is an object of the invention to reduce the risk of injury to operators operating at the aforesaid plants.

Furthermore, it is a further object of the invention to also reduce the risk of damage to the laminar supports, in particular the leathers, during the execution of such treatments.

The aforesaid objects and the relative advantages are achieved by a first treatment plant according to claim 1, by a second treatment plant according to claim 6 and by the system for producing a multilayer laminar product, comprising the aforesaid two treatment plants, according to claim 8.

Further detail features of the invention are described in the dependent claims.

The above objects and the relative advantages are also achieved by the method for producing a multilayer laminar product according to claim 9.

The aforesaid objects and advantages, together with the other ones to be mentioned hereinafter, will be highlighted during the following description of a preferred embodiment of the invention which is given, by way of non-limiting example, with reference to the attached drawings, where:
- in fig. 1 a first treatment plant according to the preferred embodiment of the invention is schematically represented;
- in fig. 2 a first treatment plant according to an alternative embodiment with respect to that of fig. 1 is schematically represented;
- in fig. 3 a second treatment plant according to the preferred embodiment of the invention is schematically represented;
- in fig. 4 the system of the invention comprising the first treatment plant of fig. 1 and the second treatment plant of fig. 3 is schematically represented;
- in fig. 5 the winding assembly belonging to the first treatment plant of fig. 1 is represented;
- in fig. 6 the unwinding assembly belonging to the second treatment plant of fig. 3 is represented.

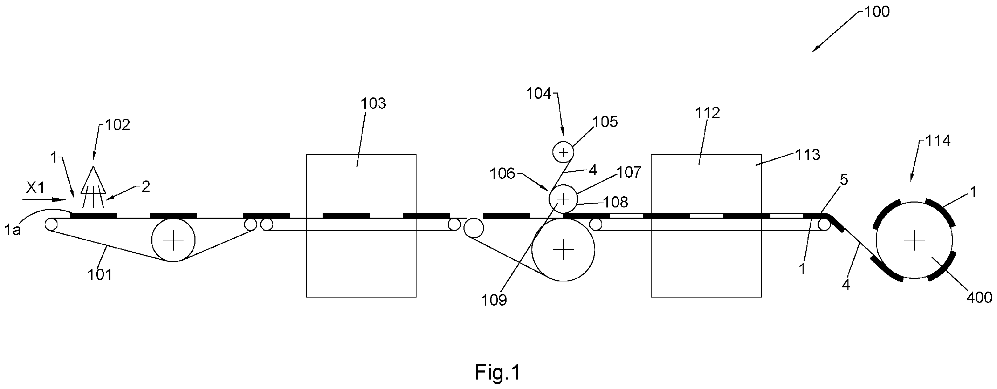

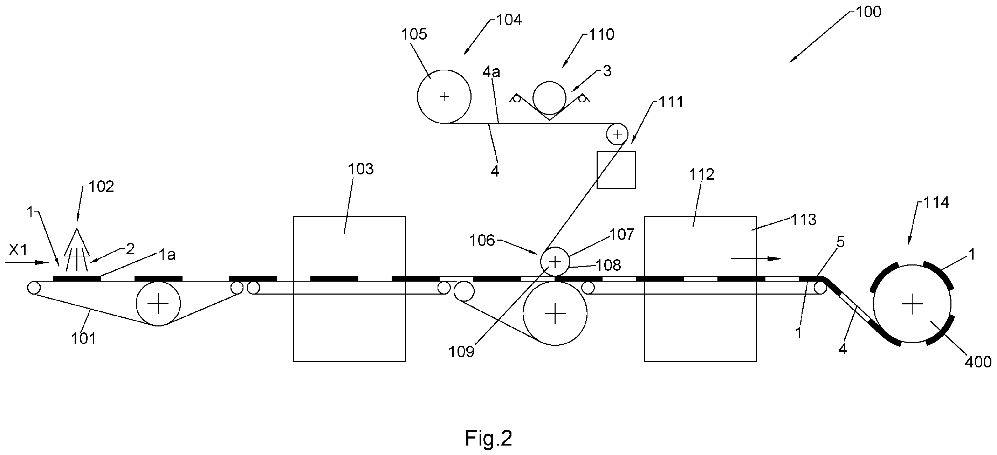

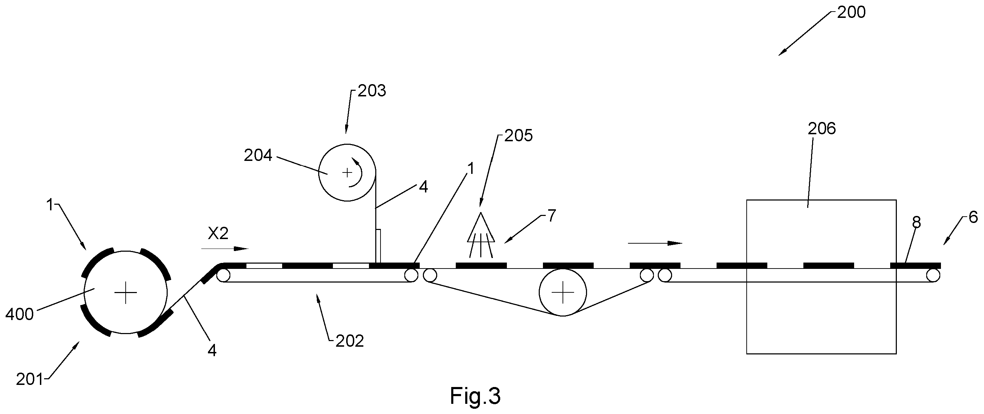

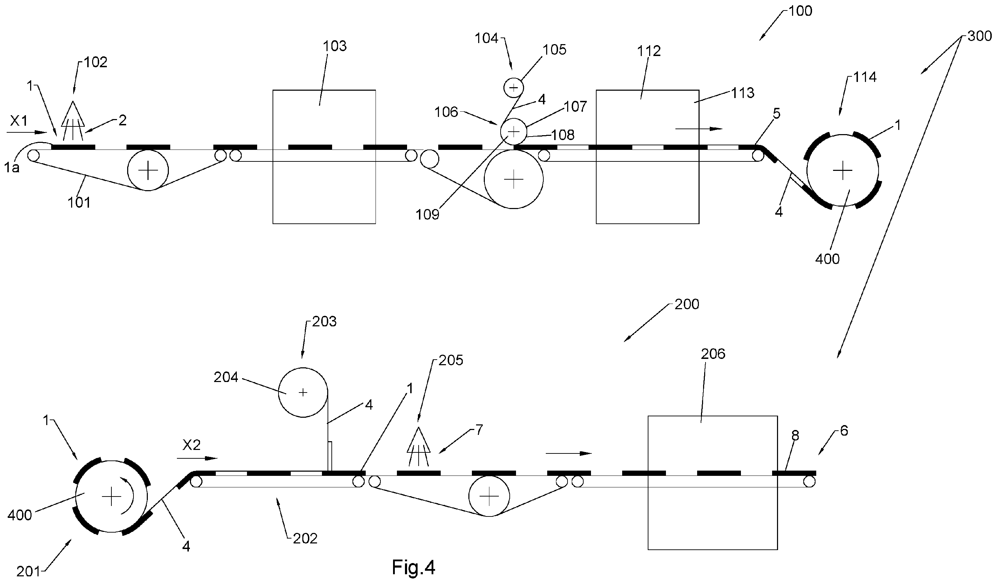

The first treatment plant, shown in figs. 1 and 2 with **100,** the second treatment plant, indicated in fig. 3 with **200,** and the system comprising the aforesaid two plants **100** and **200,** indicated overall in fig. 4 with **300,** allow to perform a method for producing a multilayer laminar product, indicated subsequently with **6,** particularly for the ennobling of leathers, starting from a laminar support, always indicated in the aforesaid figures with **1.** Preferably, the laminar support **1** is a leather, but the method of the invention and the relative plants **100** and **200** and the system **300** can also be applied to other laminar supports, in particular to fabrics, synthetic and not.

As regards the first treatment plant **100,** configured to perform at least a first surface treatment of a laminar support **1** for producing a multilayer laminar product **6,** as can be seen in fig. 1, it comprises in sequence, according to a first direction of advancement **X1,** a first feed device **101** for advancing a laminar support **1** at a predefined advancement speed, a first applicator assembly **102** for covering a first face **1a** of the laminar support **1** with a first covering layer **2** in a water-based or solvent-based polymeric, polyurethane or acrylic resin, and a first heater **103** configured to at least partially consolidate the first covering layer **2.**

According to the preferred embodiment of the invention, the aforesaid first feed device **101** comprises a flexible element closed in a loop around a series of cylinders, on which the laminar support **1** is supported, which is advanced according to the aforesaid first direction of advancement **X1.**

As regards said first covering layer **2,** it is made of a polymeric resin, preferably but not necessarily comprising polyurethane.

Such polymeric resin could alternatively be an epoxy or acrylic polymeric resin or mixtures of acrylic, polyurethane or epoxy resins.

Furthermore, such resins could comprise additives in aqueous dispersion.

Still preferably, said polymeric resin comprises pigments.

For simplicity, the aforesaid resin will hereinafter be referred to as polyurethane resin, highlighting that, alternatively, such resin could be acrylic or epoxy or mixtures of acrylic, polyurethane or epoxy resins.

As regards the first applicator assembly **102,** it, according to the preferred embodiment described herein, comprises a series of spray nozzles arranged in a circle, which are rotated around the axis of the circle so as to intersect in succession the trajectory of the laminar support **1.**

Alternatively, this series of spray nozzles could be moved with reciprocating motion and transversely to the trajectory of the laminar support **1.**

Still, according to an embodiment variant of the invention, alternatively or in combination with the aforesaid spray nozzles, the first applicator assembly **102** could comprise a doctor blade or one or more spreader cylinders for spreading the polymeric resin on the first face **1a.**

With regard to the first heater **103,** according to the preferred embodiment described herein, it comprises a battery of infrared lamps.

It is not excluded, however, that said first heater **103** may alternatively comprise a ventilated dryer with diathermic oil, steam or gas heating, provided that it is able to partially consolidate said first covering layer **2.**

Returning to the first treatment plant **100** of the invention, it also comprises a second feed device **104** for advancing a laminar element **4** at a speed corresponding to the aforesaid speed of the laminar support **1.**

In particular, according to the invention said laminar element **4** is provided in the form of a strip and therefore the second feed device **104** comprises a first reel **105** from which said laminar element strip **4** is unwound.

Preferably but not necessarily, the material with which the laminar element **4** is made is chosen from high-density polyethylene, nylon, polyester and other equivalent materials, which have a relatively low cost and adequate mechanical and thermal resistance even with very low thicknesses, for example comprised between 5 µm and 50 µm, even more preferably between 8 µm and 25 µm, specifically with thickness between 10 µm and 18 µm. It is however evident that, in embodiment variants of the invention, the laminar element **4** could be made of any other material, as long as it has the properties mentioned above and as long as it is able to perform a supporting function for the laminar support **1,** as will be clarified shortly. Furthermore, this laminar element **4** could also be made of paper.

Returning to the first treatment plant **100** according to the preferred embodiment of the invention, as can be seen in fig. 1, it also comprises a coupling and thrust assembly **106** arranged downstream of the first heater **103** and comprising an outer surface **107.** This coupling and thrust assembly **106** is configured to couple this strip formed by the laminar element **4** to the laminar support **1** and to push the aforesaid outer surface **107** against the first covering layer **2,** with the interposition of the aforesaid laminar element strip **4.**

According to the preferred embodiment of the invention, the outer surface **107** of the coupling and thrust assembly **106** is an embossed surface **108** and therefore, during said coupling and thrust operation, the pattern of said embossed surface is imprinted on the first covering layer **2,** with the interposition of the aforesaid laminar element **4.**

Even more preferably, the coupling and thrust assembly **106** comprises a cylinder **109** and the aforesaid embossed surface **108** is the outer surface of the aforesaid cylinder **109.**

Still according to the preferred embodiment of the invention, the first treatment plant **100** of which is represented in fig. 1, before performing this coupling and thrust operation, does not provide for treating the laminar element **4** in any way. It is not excluded, however, that according to alternative embodiments of the first treatment plant **100** of the invention, as represented in fig. 2, said laminar element **4** can undergo a treatment prior to said coupling and thrust operation.

For this purpose, in fact, the aforesaid first treatment plant **100** of the invention could comprise a second applicator assembly **110,** as represented in fig. 2, arranged between the second feed assembly **104** and the coupling and thrust assembly **106** and configured to cover a first face **4a** of the laminar element strip **4** with a second covering layer **3** in water-based or solvent-based polyurethane or acrylic material compatible with the first covering layer **2.**

Said second applicator assembly **110** is preferably a doctor blade, but could alternatively be one or more spreader cylinders for spreading the polymeric resin on the first face **4a.**

It is moreover evident that, in embodiment variants of the invention, any other material can be used as the second covering layer **3,** provided that it has the properties of adhesion and compatibility with the first covering layer **2.**

Furthermore, the same first treatment plant **100** could comprise, again as visible in fig. 2, a second heater **111** arranged between the second applicator assembly **110** and the coupling and thrust assembly **106** and configured to at least partially consolidate the second covering layer **3.**

In any case, according to the preferred embodiment of the invention and also according to alternative embodiments to the preferred one, the first treatment plant **100** of the invention further comprises a first heat treatment assembly **112** arranged downstream of the coupling and thrust assembly **106.** In particular, this first heat treatment assembly **112** is configured to cause the polymerization of the first covering layer **2,** and possibly of the second covering layer **3,** to obtain a stabilized covering layer **5.** Preferably, said consolidation assembly comprises a stabilization and consolidation chamber **113** capable of increasing or decreasing the temperatures of said first covering layer **2,** and possibly of the second covering layer **3,** in order to induce its/their polymerization.

Finally, according to the invention, the first treatment plant **100** comprises a winding assembly **114** arranged downstream of the first heat treatment assembly **112** and configured to wind on a transfer reel **400** the laminar element strip **4** coupled with the treated laminar support **1** or the treated laminar supports **1,** by means of the same first treatment plant **100.**

This feature, advantageously, allows to avoid that an operator has to manually unload, one by one, the laminar supports **1** treated by means of a first treatment plant and has to arrange each of these laminar supports **1** on a stand, or any other type of support, in order to be able to transfer them to a further treatment plant. Furthermore, still advantageously, the fact that the laminar element strip **4** coupled to one or more treated laminar supports **1** is wound on a transfer reel **400,** advantageously, allows to be able to pick up said transfer reel **400** by means of suitable self-propelled handling means, such as for example lift trucks, and to be able to transfer it to further treatment plants.

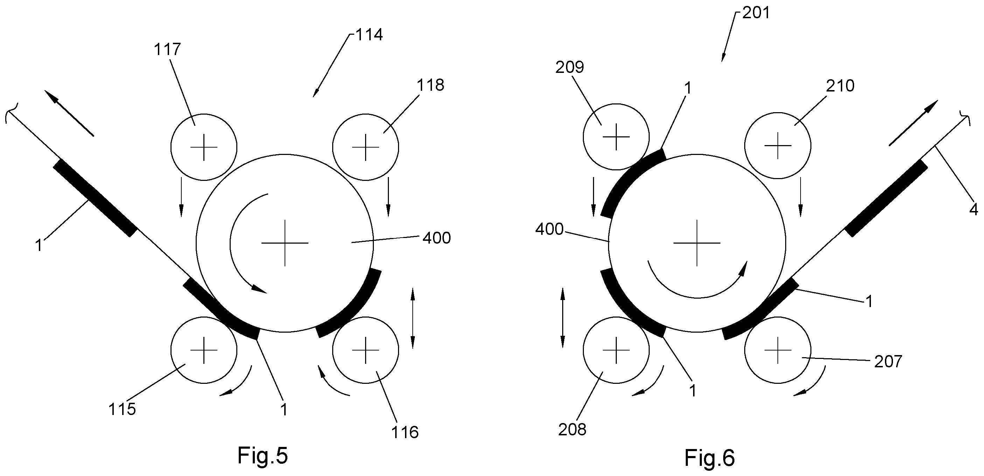

According to the preferred embodiment of the invention, as can be seen in fig. 5, the winding assembly **114** comprises a motorized roller **115** and an idle roller **116** arranged parallel to each other and configured to support below said transfer reel **400** and to rotate the same transfer reel **400** during the winding operation.

Even more preferably, said idle roller **116** is configured to be moved, preferably downwards, with respect to its normal operating position during the winding operation, so as to facilitate the release of the transfer reel **400** from the aforesaid winding assembly **114** at the conclusion of the same winding operation and, therefore, so as to facilitate the anchoring and extraction by the aforesaid self-propelled mechanical means of the transfer reel **400** from said winding assembly **114.** It is not excluded that, according to an embodiment variant of the invention, it is the motorized roller **115** that can be moved, preferably downwards, to facilitate this extraction operation.

Furthermore, again according to the preferred embodiment of the invention, the winding assembly **114** comprises two upper thrust and stabilization rollers **117** and **118,** configured to contact the transfer reel **400** and exert a downward thrust on it so as to keep the position thereof stable during the winding operation.

It is not excluded that, according to embodiment variants of the invention, a single upper thrust and stabilization roller or more than two upper thrust and stabilization rollers can be provided, as long as they are able to keep the position of the transfer reel **400** stable during the winding operation.

As mentioned above, the second treatment plant **200** for performing at least a second surface treatment of a laminar support **1** for producing a multilayer laminar product **6** is also part of the invention. In particular, said second treatment plant **200,** as visible in fig. 3, comprises in sequence, according to a second direction of advancement **X2,** an unwinding assembly **201** configured to unwind from a transfer reel **400** a laminar element strip **4** coupled with at least one laminar support **1.** In particular, this unwinding assembly **201** has the same characteristics as the winding assembly **114** of the first treatment plant **100,** including the possible variants described above.

Further, the second treatment plant **200** comprises a third feed device **202** for advancing, at a predefined advancement speed, the laminar element strip **4** coupled with the laminar support **1** or the laminar supports **1** previously treated. As for the first feed device **101,** this third feed device **202** also comprises a flexible element closed in a loop around a series of cylinders, on which the laminar element strip **4** coupled with the laminar support **1** or the laminar supports **1,** advanced according to the aforesaid second direction of advancement **X2,** is supported.

Furthermore, the second treatment plant **200** comprises a separation device **203** configured to separate the laminar element strip **4** from the laminar supports **1.** In particular, said separation device **203** comprises a winding reel **204** on which the laminar element strip **4** separated from the laminar supports **1** is wound, and allows the same laminar supports **1** to continue their advancement along the aforesaid second direction of advancement **X2** in order to be able to be subjected to further treatment by means of the aforesaid second treatment plant **200.**

Advantageously, the so structural second treatment plant **200** of the invention allows to avoid the manual loading by an operator of the individual laminar supports **1** previously treated by a previous treatment plant, and allows the automatic and continuous loading of the aforesaid laminar supports **1.**

In order to perform the aforesaid second treatment, the second treatment plant **200** comprises a third applicator assembly **205** for covering a first face **1a** of the laminar support **1** with a third covering layer **7** in a water-based or solvent-based polymeric, polyurethane or acrylic resin, and a second heat treatment assembly **206** configured to cause the polymerization of the third covering layer **7** to obtain a stabilized covering layer **8.**

Also in this case, with regard to the third applicator assembly **205,** according to the preferred embodiment described herein, it comprises a series of spray nozzles arranged in a circle, which are rotated around the axis of the circle so as to intersect in succession the trajectory of the laminar support **1.**

Alternatively, this series of spray nozzles could be moved with reciprocating motion and transversely to the trajectory of the laminar support **1.**

Still, according to an embodiment variant of the invention, alternatively or in combination with the aforesaid spray nozzles, the third applicator assembly **205** could comprise a doctor blade or one or more spreader cylinders for spreading the polymeric resin on the first face **1a.**

As mentioned above, the assembly of the first treatment plant **100** and of the second treatment plant **200** makes up the system **300** for producing a multilayer laminar product **6.**

This system **300,** according to the invention, therefore provides that the transfer reel **400,** comprising the laminar element strip **4** coupled with a laminar support **1** or a plurality of laminar supports **1** treated with the aforesaid first treatment plant **100,** is arranged on the unwinding assembly **201** of the second treatment plant **200,** by means of which the second surface treatment is carried out.

The invention also relates to a method for producing a multilayer laminar product **6** by means of the system **300** of the invention, where this method comprises the following operations:
- arranging a laminar support **1** on the first treatment plant **100;**
- advancing the laminar support **1** along the first direction of advancement **X1** by means of the first feed device **101;**
- covering a first face **1a** of the laminar support **1** with a first covering layer **2** in a water-based or solvent-based polyurethane or acrylic resin by means of the first applicator assembly **102;**
- consolidating, at least partially, the first covering layer **2** by means of the first heater **103;**
- advancing a laminar element strip **4** by means of the second feed device **104;**
- coupling and pushing above the laminar support **1** the laminar element strip **4** by means of the coupling and thrust assembly **106;**
- causing the polymerization of the first covering layer **2** to obtain a single stabilized covering layer **5** by means of the heat treatment assembly **112;**
- winding on a transfer reel **400** the laminar element strip **4** coupled with the laminar support **1** by means of the winding assembly **114;**
- transferring the transfer reel **400** on which the laminar element strip **4** coupled with the laminar support **1** has been wound on the unwinding assembly **201** of the second treatment plant **200;**
- unwinding from the transfer reel **400** the laminar element strip **4** coupled with the laminar support **1** by means of the unwinding assembly **201;**
- advancing the strip of said laminar element **4** coupled with the laminar support **1** along the second direction of advancement **X2** defined in the second treatment plant **200,** by means of the third feed device **202;**
- separating the laminar element strip **4** from the laminar support **1** by means of the separation device **203;**
- covering a first face **1a** of the laminar support **1** with a third covering layer **7** in a water-based or solvent-based polymeric, polyurethane or acrylic resin by means of the third applicator assembly **205;**
- causing the polymerization of the third covering layer **7** to obtain a stabilized covering layer **8** by means of the second heat treatment assembly **206.**

As mentioned above, it is understood that the first treatment plant, the second treatment plant, the system comprising said two plants and the method described above achieve the purposes and advantages set forth above.

In particular, the purpose of automating the operations of unloading, transferring and loading the laminar supports, in particular the leathers, from a first treatment plant to a second treatment plant has been achieved.

This allows, therefore, to achieve the purpose of reducing the number of operators operating at these two plants, thus reducing personnel costs and processing times.

In addition, this allows to achieve the purpose of reducing the risks of injury of the operators assigned to operate at the aforesaid plants.

This also makes it possible to achieve the purpose of also reducing the risk of damage to the laminar supports, in particular to the leathers during the execution of these treatments.

## Claims

1. First treatment plant (100) for performing at least a first surface treatment of a laminar support (1) for producing a multilayer laminar product (6), said first treatment plant (100) comprising in sequence, according to a first direction of advancement (X1):
- a first feed device (101) for advancing a laminar support (1) at a predetermined advancement speed;
- a first applicator assembly (102) for covering a first face (1a) of said laminar support (1) with a first covering layer (2) in a water-based or solvent-based polymeric, polyurethane or acrylic resin;
- a first heater (103) configured to at least partially consolidate said first covering layer (2);
- a second feed device (104) for advancing a laminar element (4) at a speed corresponding to said advancement speed, said laminar element (4) being provided in the form of a strip, said second feed device (104) comprising a first reel (105) from which said strip of said laminar element (4) is unwound;
- a coupling and thrust assembly (106) arranged downstream of said first heater (103) and comprising an outer surface (107), said coupling and thrust assembly (106) being configured to couple said strip of said laminar element (4) to said laminar support (1) and to push said outer surface (107) against said first covering layer (2), with interposition of said strip of said laminar element (4);
- a first heat treatment assembly (112) arranged downstream of said coupling and thrust assembly (106), configured to cause the polymerization of said first covering layer (2) to obtain a stabilized covering layer (5);
- a winding assembly (114) arranged downstream of said first heat treatment assembly (112) and configured to wind on a transfer reel (400) said strip of said laminar element (4) coupled with said at least one laminar support (1);
**characterized in that** said winding assembly (114) comprises at least one motorized roller (115) and at least one idle roller (116) configured to support below said transfer reel (400) and to rotate said transfer reel (400) during the winding operation, said at least one motorized roller (115) or said at least one idle roller (116) being configured to be moved, preferably downwards, with respect to its normal operating position during said winding operation, so as to facilitate the exit of said transfer reel (400) from said winding assembly (114) at the conclusion of said winding operation.

2. First treatment plant (100) according to claim 1, **characterized in that** said outer surface (107) of said coupling and thrust assembly (106) is an embossed surface (108), said thrust imprinting on said first covering layer (2) the pattern of said embossed surface (108).

3. First treatment plant (100) according to claim 2, **characterized in that** said coupling and thrust assembly (106) comprises a cylinder (109), said embossed surface (108) being the outer surface of said cylinder (109).

4. First treatment plant (100) according to any one of the preceding claims,
**characterized by** comprising:
- a second applicator assembly (110) arranged between said second feed device (104) and said coupling and thrust assembly (106) and configured to cover a first face (4a) of said laminar element (4) with a second covering layer (3) in water-based or solvent-based polyurethane or acrylic material;
- a second heater (111) arranged between said second applicator assembly (110) and said coupling and thrust assembly (106) and configured to at least partially consolidate said second covering layer (3).

5. First treatment plant (100) according to any one of the preceding claims,
**characterized in that** said winding assembly (114) comprises at least one upper thrust and stabilization roller (117, 118) configured to contact said transfer reel (400) and exert a downward thrust on said transfer reel (400) so as to maintain the position of said transfer reel (400) stable during said winding operation.

6. Second treatment plant (200) for performing at least a second surface treatment of a laminar support (1) for producing a multilayer laminar product (6), said second treatment plant (200) comprising in sequence, according to a second direction of advancement (X2):
- an unwinding assembly (201) configured to unwind from a transfer reel (400) a laminar element strip (4) coupled with at least one laminar support (1);
- a third feed device (202) for advancing said strip of said laminar element (4) coupled with said at least one laminar support (1) at a predefined advancement speed;
- a separation device (203) configured to separate said strip of said laminar element (4) from said at least one laminar support (1), said separation device (203) comprising a winding reel (204) on which said strip of said laminar element (4) separated from said at least one laminar support (1) is wound;
- a third applicator assembly (205) for covering a first face (1a) of said laminar support (1) with a third covering layer (7) in a water-based or solvent-based polymeric, polyurethane or acrylic resin;
- a second heat treatment assembly (206) configured to cause the polymerization of said third covering layer (7) to obtain a stabilized covering layer (8);
**characterized in that** said unwinding assembly (201) comprises at least one motorized roller (207) and at least one idle roller (208) configured to support below said transfer reel (400) and to rotate said transfer reel (400) during the unwinding operation, said at least one motorized roller (207) or said at least one idle roller (208) being configured to be moved, preferably downwards, with respect to its normal operating position during said unwinding operation, so as to facilitate the insertion of said transfer reel (400) in said unwinding assembly (201) prior to said unwinding operation.

7. Second treatment plant (200) according to claim 6, **characterized in that** said unwinding assembly (201) comprises at least one upper thrust and stabilization roller (209, 210) configured to contact said transfer reel (400) and exert on said transfer reel (400) a downward thrust so as to keep the position of said transfer reel (400) stable during said unwinding operation.

8. System (300) for producing a multilayer laminar product (6),
**characterized in that** it comprises a first treatment plant (100) according to any one of claims 1 to 5 and a second treatment plant (200) according to any one of claims 6 or 7, wherein the transfer reel (400), comprising said strip of said laminar element (4) coupled with at least said laminar support (1) and wound by means of said winding assembly (114) of said first treatment plant (100), is arranged on said unwinding assembly (201) of said second treatment plant (200) by means of which said at least one second surface treatment is carried out.

9. Method for producing a multilayer laminar product (6) by means of the system (300), according to claim 8, **characterized in that** it comprises the following operations:
- arranging a laminar support (1) on said first treatment plant (100);
- advancing said laminar support (1) along said first direction of advancement (X1) by means of said first feed device (101);
- covering a first face (1a) of said laminar support (1) with a first covering layer (2) in a water-based or solvent-based polyurethane or acrylic resin by means of said first applicator assembly (102);
- consolidating, at least partially, said first covering layer (2) by means of said first heater (103);
- advancing a laminar element strip (4) by means of said second feed device (104);
- coupling and pushing above said laminar support (1) said strip of said laminar element (4) by means of said coupling and thrust assembly (106);
- causing the polymerization of said first covering layer (2) to obtain a single stabilized covering layer (5) by means of said first heat treatment assembly (112);
- winding on a transfer reel (400) said strip of said laminar element (4) coupled with said at least one laminar support (1) by means of said winding assembly (114);
- transferring said transfer reel (400) on which said strip of said laminar element (4) coupled with said at least one laminar support (1) has been wound on said unwinding assembly (201) of said second treatment plant (200);
- unwinding from said transfer reel (400) said strip of said laminar element (4) coupled with said at least one laminar support (1) by means of said unwinding assembly (201);
- advancing said strip of said laminar element (4) coupled with said at least one laminar support (1) along said second direction of advancement (X2) defined in said second treatment plant (200), by means of said third feed device (202);
- separating said strip of said laminar element (4) from said at least one laminar support (1) by means of said separation device (203);
- covering a first face (1a) of said laminar support (1) with a third covering layer (7) in a water-based or solvent-based polymeric, polyurethane or acrylic resin by means of said third applicator assembly (205);
- causing the polymerization of said third covering layer (7) to obtain a stabilized covering layer (8) by means of said second heat treatment assembly (206).
